# EUROPÄISCHE PATENTANMELDUNG

(11) **EP 4 295 699 A1**
(43) Veröffentlichungstag der Anmeldung: **27.12.2023**
(21) Anmeldenummer: 23174525.8
(22) Anmeldetag: 22.05.2023
(51) Int. Cl.: A23L 5/10, A22C 9/00, A23B 4/01, A23B 4/015, A23L 3/005, A23L 3/32, A23L 5/30, A23L 13/60, C12M 1/42

(54) **VERFAHREN ZUR STRUKTUR- UND EIGENSCHAFTSVERBESSERUNG VON PRODUKTEN AUF DER BASIS ODER ENTHALTEND TIERISCHE ZELLEN, INSBESONDERE FLEISCHPRODUKTE**

(30) Priorität: 23.06.2022 DE 102022115695
(71) Anmelder: Kortschack, Fritz, 26125 Oldenburg (DE)
(72) Erfinder: Kortschack, Fritz, 26125 Oldenburg (DE)
(74) Vertreter: Meissner Bolte Partnerschaft mbB

(57) **Zusammenfassung**

Die Erfindung betrifft ein Verfahren zur Struktur- und Eigenschaftsverbesserung von Produkten auf der Basis oder enthaltend tierische Zellen, insbesondere Fleischprodukte. Nach einer Probennahme und Analyse der zu behandelnden Produkte und einem Bestimmen der für die Behandlung mittels Poreninduktion durch Elektroporation erforderlichen Pulscharakteristik und des Energieeintrages wird eine Elektroporationsbehandlung ausgeführt. Hierbei vermischt sich nach Austritt intrazellulärer Flüssigkeit diese mit extrazellulärer Flüssigkeit, so dass sich eine erhöhte Bindungsfähigkeit für Fremdflüssigkeiten ergibt.

## Beschreibung

Die Erfindung betrifft ein Verfahren zur Struktur- und Eigenschaftsverbesserung von Produkten auf der Basis oder enthaltend tierische Zellen, insbesondere auch Fleischprodukte.

Zur Haltbarmachung von Lebensmitteln ist neben verschiedenen thermischen Verfahren in den letzten Jahren verstärkt auf das HochspannungsImpulsverfahren (PEF) zurückgegriffen worden. Bei diesem Verfahren soll durch die Einwirkung gepulster elektrischer Felder eine Entkeimung von Lebensmitteln möglich sein oder ein Zugang zu zellulären Inhaltsstoffen geschaffen werden.

Beim Hochspannungsimpulsverfahren erfolgt eine schlagartige Entladung eines Kondensators zur Erzeugung von Hochspannungsimpulsen, die über unterschiedlich gestaltete Elektroden an das zu behandelnde Lebensmittel übertragen werden.

Bei der Anwendung gepulster elektrischer Felder ist es unter anderem Ziel, die Zellstruktur des zu behandelnden Produktes zu beeinflussen.

Da das Grundprinzip der Elektroporation auf Mikroorganismen angewendet werden kann, besteht die Möglichkeit, vegetative Keime zu reduzieren. Durch eine Permeabilisierung der jeweiligen Zellmembran verliert selbige ihre Barrierefunktion. Die Folge ist eine Inaktivierung von Mikroorganismen. Ein Vorteil gegenüber herkömmlichen Verfahren der Haltbarmachung von Lebensmitteln ist hier die geringere Temperaturbelastung. Nährstoffe, Aromen oder Farbstoffe werden nicht beeinflusst und bleiben erhalten.

Eine weitere bekannte Anwendungsmöglichkeit der PEF-Behandlung liegt in der Kartoffelindustrie als Vorbehandlung vor dem Schneiden, insbesondere bei der Herstellung von Pommes Frites.

Letztendlich stellt die PEF-Technologie eine Lösung dar, um klassische Trocknungsprozesse bezüglich Trocknungszeit und Trocknungstemperaturen zu optimieren.

Auch zur Konservierung von Säften bietet die PEF-Behandlung Vorteile. Das jeweilige Produkt wird nur über sehr kurze Zeit den erforderlichen Hochspannungsimpulsen ausgesetzt. Farbstoffe und Vitamine bleiben erhalten. Nachteile wie bei einer klassischen thermischen Behandlung, insbesondere thermischer Pasteurisation, zum Beispiel eine Produktverfärbung, entfallen.

Aus dem Vorgenannten ist es daher Aufgabe der Erfindung, unter Nutzung der an sich bekannten PEF-Technologie ein weiterentwickeltes Verfahren zur Struktur- und Eigenschaftsverbesserung von Produkten auf der Basis oder enthaltend tierische Zellen anzugeben.

Die Lösung der Aufgabe der Erfindung erfolgt mit der Lehre gemäß Patentanspruch 1 bzw. der vorteilhaften Anwendung nach Patentanspruch 9, wobei die Unteransprüche mindestens zweckmäßige Ausgestaltungen und Weiterbildungen des Verfahrens darstellen.

Das Verfahren zur Struktur- und Eigenschaftsverbesserung von Produkten auf der Basis oder enthaltend tierische Zellen, insbesondere Fleischprodukte, geht zunächst davon aus, dass im jeweiligen Prozess oder dem Prozess vorgelagert eine Probennahme des zu behandelnden Produktes vorgenommen wird. Anhand der Probe erfolgt eine Analyse der Probeneigenschaften, welche maßgeblich sind für das Anlegen elektrischer Felder und deren relevante und typische Eigenschaften.

Konkret wird die Struktur des zu behandelnden Produktes, der Gehalt an Flüssigkeiten, die Leitfähigkeit des Produktes und weiteres zur Analyse herangezogen.

Der Analyse folgend wird eine Bestimmung der für die Behandlung mittels Poreninduktion durch Elektroporation erforderlichen Pulscharakteristik und des notwendigen Energieeintrages vorgenommen.

Hierbei kann auf tabellarisch gespeicherte Werte zurückgegriffen oder aber auch ein Testbehandlungslauf durchgeführt werden.

Die anschließende Elektroporationsbehandlung wird bis zu einem Zeitpunkt der Bildung einer Vielzahl von hydrophoben Zellporen ausgeführt.

Es erfolgt dann eine Prozessfortführung mit Austritt intrazellulärer Flüssigkeit sowie Vermischung dieser mit vorhandener oder dem Produkt zugegebener extrazellulärer Flüssigkeit, wobei sich aufgrund der Vermischung intrazellulärer mit extrazellulärer Flüssigkeit eine erhöhte Bindungsfähigkeit für Fremdflüssigkeiten ergibt.

Während der PEF-Behandlung kann das Produkt einer kinetischen Energieeinwirkung ausgesetzt werden.

Diese kinetische Energieeinwirkung kann beispielsweise eine Druckbehandlung in Form von Unterdruck, Überdruck oder gepulstem Druck umfassen.

Kinetische Energie kann auch über ein Walken oder Kneten des Produktes oder eine sonstige mechanische Aktivierung eingebracht werden.

Für die Bestimmung der Pulscharakteristik wird die notwendige elektrische Feldstärke, die Pulsbreite und die Pulsform und der insgesamt erforderliche Energieeintrag herangezogen.

Bei all diesem ist maßgeblich, dass es nicht zu einer ungewollten thermischen Beeinflussung des Produktes kommt. Ebenso ist das Entstehen von Gasen durch Elektrolysevorgänge auszuschließen.

Ein weiterer Aspekt der Erfindung besteht darin, die PEF-Behandlung mit dem Ziel durchzuführen, Kollagenzellen zu öffnen und hierdurch eine Konsistenzreduzierung zu erreichen.

Erfindungsgemäß kann das Produkt einer Vorerwärmung zur Verbesserung der Ergebnisse der PEF-Behandlung, welche sich anschließt, unterzogen werden.

Als Fremdflüssigkeit kann beispielsweise Wasser dem Produkt zugeführt werden. Der Fremdflüssigkeit können auch bewusst Stoffe, wie Gewürze oder dergleichen beigegeben sein.

Als Grenzwert für den prozessrelevanten Energieeintrag auf das Produkt ist die bereits erwähnte Verhinderung unerwünschter Elektrolyse oder die Entstehung reaktivem Sauerstoffs vorgegeben.

Eine erfindungsgemäße Anwendung des Verfahrens, wie vorstehend erläutert, dient der Erhöhung der Bindigkeit von Lebensmitteln, insbesondere Fleischprodukten, durch Freisetzung von Proteinen oder Peptiden. Das vorstehend geschilderte Verfahren kann sich unmittelbar an einen Schlachtvorgang anschließen. Es kann die Behandlung von Tierkörpern, Tierkörperhälften von Rind, Schwein, Puten, Hähnchen und dergleichen erfolgen.

Die Behandlung kann im Produktionsprozess der Zerlegung und Trennung von Tierkörpern integriert werden.

Ebenso besteht die Möglichkeit der Behandlung von Einzelprodukten, die sich beispielsweise auf einem Transportband befinden.

Eine Behandlung kann sich auch einem Misch- oder Verkleinerungsvorgang entsprechend der Produkte anschließen.

Das Verfahren eignet sich auch zur PEF-Behandlung und Verbesserung der Produkteigenschaften portionierter Stücke, zum Beispiel Schinken, oder in einer Form befindlichen Mischung, zum Beispiel Wurstbrät im Darm.

Ebenso eignet sich das Verfahren zur Behandlung von Produkten, die durch Trennschichten wie Fett oder Sehnen strukturiert sind, wie beispielsweise Schweinebauch.

Die eigentliche PEF-Behandlung mit dem Ziel des Eintragens elektrischer Energie in die Zellen erfolgt mittels Durch- oder Einsteckelektroden, aber auch flächig ausgebildeten Elektrodenanordnungen.

Erfindungsgemäß behandelte Produkte weisen keinen Produktionsverlust auf, was auch für einen späteren Koch- und Bratvorgang zutrifft.

Der geringere Austrocknungsgrad führt zu einem späteren vollmundigeren bzw. zarten Biss. Endprodukte, die auf erfindungsgemäß behandelte Ausgangsprodukte zurückgehen, tragen wegen des reduzierten Verlustes an in der Flüssigkeit gelöstem Eiweiß dazu bei, wertvolle Lebensmittel nicht zu verschwenden.

Weitere Untersuchungen haben gezeigt, dass die hier vorgestellte PEF-Behandlung auch für rohe Backwaren oder Teige Anwendung finden kann, um die Bindigkeit des Endproduktes zu erhöhen. Durch die Behandlung gemäß dem vorgestellten Verfahren kann die Struktur der Teigproteine verändert werden, indem der natürliche Prozess der Denaturierung und Vernetzung von Proteinen beschleunigt wird. Hierdurch verbessert sich die Viskosität und Elastizität des Teigs, was zu einer verbesserten Knetfähigkeit und Formbarkeit führt.

Auch ergibt sich eine Verbesserung der Hydratation und Quellung der Stärke im Teig, was erhöhte Bindungseigenschaften zur Folge hat. Eine erhöhte Bindungsfähigkeit trägt dazu bei, dass das Endprodukt beim Backen eine bessere Krume aufweist und weniger brüchig ist.

Auch grobkörnige Backwaren erreichen eine bessere Bindigkeit des Endproduktes.

Das vorgestellte Verfahren trägt weiterhin zur Steigerung der Enzymaktivität bei, welche die Teigbildung fördert und die Konsistenz des Endproduktes verbessert.

Extrahierte intrazelluläre Inhaltsstoffe tragen zur Erhöhung der Viskosität und Verbesserung der Stabilität bei. Hierdurch erhält das Endprodukt eine höhere Elastizität und eine verbesserte Textur.

Bei der Behandlung von Schwarten oder Sehnen verbessert sich die Diffusion von Salzen und Enzymen in das Fleischgewebe hinein. Hierdurch wird der Abbau von Kollagen und Elastin gefördert, was dazu beiträgt, dass das Fleisch weicher und zarter wird.

## Patentansprüche

1. Verfahren zur Struktur- und Eigenschaftsverbesserung von Produkten auf der Basis oder enthaltend tierische Zellen, insbesondere Fleischprodukte, umfassend folgende Schritte:
- Probennahme des zu behandelnden Produktes und Analyse der jeweiligen, für das Anlegen elektrischer Felder relevanten und typischen Eigenschaften;
- Bestimmen der für die Behandlung mittels Poreninduktion durch Elektroporation erforderlichen Pulscharakteristik und des notwendigen Energieeintrages;
- Ausführen der Elektroporationsbehandlung (PEF) bis zu einem Zeitpunkt der Bildung einer Vielzahl von hydrophoben Zellen;
- Prozessfortführung mit Austritt intrazellulärer Flüssigkeit sowie Vermischung dieser mit vorhandener oder dem Produkt bereits zugegebener extrazellulärer Flüssigkeit, wobei sich aufgrund der Vermischung intrazellulärer mit extrazellulärer Flüssigkeit eine erhöhte Bindungsfähigkeit für Fremdflüssigkeiten einstellt.

2. Verfahren nach Anspruch 1,
**dadurch gekennzeichnet, dass**
während der PEF-Behandlung des Produktes diesem kinetische Energie zugeführt wird oder das Produkt kinetischer Energieeinwirkung ausgesetzt ist.

3. Verfahren nach Anspruch 1 oder 2,
**dadurch gekennzeichnet, dass**
für die Bestimmung der Pulscharakteristik die notwendige elektrische Feldstärke, die Pulsbreite und Pulsform und der insgesamt erforderliche Energieeintrag herangezogen wird.

4. Verfahren nach einem der vorangegangenen Ansprüche,
**dadurch gekennzeichnet, dass**
das Produkt vor, während oder nach seiner PEF-Behandlung einer Druckeinwirkung unterzogen wird.

5. Vorrichtung nach einem der vorangegangenen Ansprüche,
**dadurch gekennzeichnet, dass**
die PEF-Behandlung mit dem Ziel des Öffnens von Kollagenzellen zur Konsistenzreduzierung ausgeführt wird.

6. Verfahren nach einem der vorangegangenen Ansprüche,
**dadurch gekennzeichnet, dass**
das Produkt einer Vorerwärmung unterzogen wird.

7. Verfahren nach einem der vorangegangenen Ansprüche,
**dadurch gekennzeichnet, dass**
als Fremdflüssigkeit Wasser zugegeben wird.

8. Verfahren nach einem der vorangegangenen Ansprüche,
**dadurch gekennzeichnet, dass**
als Grenzwert für den prozessrelevanten Energieeintrag auf das Produkt die Verhinderung unerwünschter Elektrolyse oder die Entstehung reaktiven Sauerstoffs vorgegeben wird.

9. Anwendung eines Verfahrens nach einem oder mehreren der vorangegangenen Ansprüche zur Erhöhung der Bindigkeit von Lebensmitteln, insbesondere Fleischprodukten durch Freisetzung von Proteinen oder Peptiden.
